(19) **Europäisches Patentamt / European Patent Office / Office européen des brevets**

(11) **EP 1 390 905 B1**

(12) **FASCICULE DE BREVET EUROPEEN**

(45) Date de publication et mention
de la délivrance du brevet:
**27.02.2008 Bulletin 2008/09**

(21) Numéro de dépôt: **02735549.4**

(22) Date de dépôt: **22.05.2002**

(51) Int Cl.:
*G06K 9/32* (2006.01)

(86) Numéro de dépôt international:
**PCT/FR2002/001712**

(87) Numéro de publication internationale:
**WO 2002/095662 (28.11.2002 Gazette 2002/48)**

(54) **PROCEDE DE DETECTION DE ZONES DE TEXTE DANS UNE IMAGE VIDEO**

VERFAHREN ZUM BESTIMMEN VON TEXTFELDERN IN EINEM VIDEOBILD

METHOD FOR DETECTING TEXT ZONES IN A VIDEO IMAGE

(84) Etats contractants désignés:
**DE ES GB IT**

(30) Priorité: **23.05.2001 FR 0106776**

(43) Date de publication de la demande:
**25.02.2004 Bulletin 2004/09**

(73) Titulaire: **FRANCE TELECOM**
**75015 Paris (FR)**

(72) Inventeurs:
• **WOLF, Christian**
**F-69100 Villeurbanne (FR)**
• **JOLION, Jean-Michel**
**F-69100 Villeurbanne (FR)**
• **CHASSAING, Françoise**
**F-35000 Rennes (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**EP-A- 0 720 114    WO-A-00/45291**

• **SANGSHIN KWAK ET AL: "Video caption image enhancement for an efficient character recognition" PROCEEDINGS 15TH INTERNATIONAL CONFERENCE ON PATTERN RECOGNITION. ICPR-2000, PROCEEDINGS OF 15TH INTERNATIONAL CONFERENCE ON PATTERN RECOGNITION, BARCELONA, SPAIN, 3-7 SEPT. 2000, pages 606-609 vol.2, XP002189083 2000, Los Alamitos, CA, USA, IEEE Comput. Soc, USA ISBN: 0-7695-0750-6**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé de détection de zones de texte dans une ou plusieurs images vidéo. Elle trouve son application dans le cadre de systèmes de recherche ou d'indexation de documents vidéo dans des bases de données audiovisuelles accessibles ou non par internet.

L'apparition récente de bases de données audiovisuelles a nécessité le développement d'outils capables d'analyser le contenu des documents vidéo appartenant à ces bases de données. Les seuls outils d'analyse disponibles actuellement sur le marché utilisent des méthodes de traitement de l'image visant à extraire des données sur les caractéristiques bas niveau de l'image, telles que des données sur la couleur, la texture et le contraste de l'image. Le résultat de ce type d'analyse n'est pas très probant en terme de contenu car deux images ayant des contenus sémantiques différents peuvent avoir les mêmes caractéristiques bas niveau, de même que deux images portant sur le même sujet peuvent avoir des caractéristiques bas niveau très différentes.

Une information qui peut être très utile pour la compréhension du contenu sémantique de l'image est le texte présent dans l'image. Par exemple, les informations présentes dans les images d'un reportage peuvent être révélatrices du sujet, du lieu ou de la date des événements relatés dans le reportage. De même, les informations contenues dans le générique d'un film sont autant d'informations sur le contenu du film et les personnes ayant participé au film.

Actuellement, il existe une technique de reconnaissance optique de caractères appelée OCR (pour Optical Character Recognition en langue anglaise) qui permet d'extraire le texte contenu dans des images numériques de texte, par exemple dans une image scannée d'une page de journal ou de livre. Cette technique fournit de bons résultats lorsque le document comporte un texte ayant une taille de caractères donnée et un fond uniforme et que la résolution de l'image du document est élevée (par exemple 200-400 dpi).

Les résultats obtenus avec cette technique sur des images vidéo ne sont en revanche pas très satisfaisants. Les principales raisons de ces mauvais résultats sont les suivantes :

- il est plus difficile de distinguer le texte dans une image vidéo car le fond de l'image est en général très complexe et peut contenir des éléments pouvant être assimilés à du texte; dans une image vidéo, le texte est en effet soit superposé sur une scène de fond (on parle alors de "texte artificiel") comme par exemple les sous-titres dans un film, soit inclus dans la scène de l'image (on parle de "texte de scène") comme par exemple le texte inscrit sur le tee-shirt d'un acteur dans un film;

- le texte contenu dans une image vidéo n'est en général pas structuré en lignes et en paragraphes, et les caractères du texte n'ont pas forcément la même taille;

- pour rehausser le contraste du texte dans l'image vidéo, des artifices sont parfois utilisés : par exemple, les caractères sont inscrits avec une partie ombrée ou en trois dimensions; de plus, toute une palette de couleurs est utilisée pour afficher le texte et le fond de l'image, ce qui rend très difficile la détection du texte;

- enfin, en vidéo, les images ont généralement une résolution comprise entre $160 \times 100$ pixels (diffusion par internet) et 720x480 pixels (DVD codé en MPEG2); un format typique est le format CIF avec $384 \times 288$ pixels, à comparer avec la résolution ($2500 \times 3500$ pixels) d'une image A4 scannée en 300dpi; cette faible résolution est en partie due aux caméras employées pour générer les images; elle est également due au fait que les images vidéo sont en général comprimées pour pouvoir être stockées et transportées sur des réseaux informatiques; la reconnaissance optique de caractères est donc moins performante sur les images vidéo.

En conséquence, il apparaît que la technique de reconnaissance de caractères employée pour les images numériques de texte ne peut être employée telle quelle sur des images vidéo.

Il apparaît nécessaire de détecter en premier lieu les zones de l'image vidéo comportant du texte et d'appliquer ensuite les techniques d'OCR sur ces zones de texte. Des recherches ont été effectuées sur le sujet. Les procédés de détection de texte connus sont basés principalement sur une segmentation de l'image vidéo et un regroupement des caractères. A titre d'exemple, on peut citer le document WO 00/45291 et le document intitulé "Automatic Text Location in Images and Video Frames" de A.K Jain et B. Yu, Technical Report MSU-CPS-97-33, PRIP Lab., Department of Computer Science, 1997. Les auteurs de ce dernier document supposent que la couleur des caractères du texte est uniforme et utilisent une réduction des couleurs suivie par une segmentation de l'image en zones de texte et zones de fond, puis une phase de regroupement spatial de zones de texte. Bien que la présence des caractères joints est prévue par les auteurs, la phase de segmentation pose de nombreux problèmes dans le cas de documents de mauvaise qualité, notamment dans le cas de séquences vidéos de faible résolution.

Le document brevet EP 0 720 114 décrit un procédé de détection comprenant une étape de détection de contours dans laquelle chaque pixel de l'image vidéo est associé à un gradient normé dérivé des gradients horizontal et vertical du pixel pour former une image de gradients normés, suivie d'une binarisation de cette image de gradients, et d'une compression de l'image binaire résultante.

Le document intitulé « Video caption image enhancement for efficient character recognition», de Sangshin Kwak et al, Proceedings 15th International Conference on Pattern Recognition, ICPR-2000, 3-7 Sept 2000, vol 2, pages 606-609, décrit l'application d'un traitement de morphologie mathématique sur une image binaire pour améliorer la reconnaissance de caractères dans des zones de texte déjà détectées de l'image, et plus particulièrement pour lisser les limites des caractères de texte.

Le but de l'invention est de pallier aux inconvénients de l'art antérieur précité.

L'invention concerne un procédé de détection de zones de texte dans une image vidéo, caractérisé en ce qu'il comporte les étapes suivantes :

- calculer le gradient horizontal de l'intensité de chaque pixel de ladite image vidéo et additionner, pour chaque pixel de ladite image vidéo, les gradients horizontaux des pixels appartenant à une fenêtre d'intégration horizontale englobant le pixel considéré de manière à générer une image de gradients somme,
- transformer ladite image de gradients somme en une image binaire par une opération de seuillage consistant à comparer la valeur de gradient somme de chaque pixel de l'image de gradients somme avec au moins une valeur seuil, pour attribuer à chaque pixel soit la valeur de niveau de gris V1 représentatif d'un pixel texte appartenant à une zone texte, soit la valeur de niveau de gris V2 représentatif d'une pixel non texte n'appartenant pas à une zone de texte, de manière à obtenir une image binaire comportant des pixels de texte ayant une valeur de niveau de gris V1 et des pixels de non texte ayant une valeur de niveau de gris V2, les pixels de texte voisins définissant des zones de texte, et
- appliquer, ligne par ligne, un traitement de morphologie mathématique à ladite image binaire afin de raccorder, pour n'en former qu'une seule, les zones de texte distantes horizontalement au plus de N pixels.

Pour calculer le gradient horizontal de chaque pixel de coordonnées (x,y) dans ladite image vidéo et additionner entre eux les gradients horizontaux des pixels appartenant à une fenêtre d'intégration horizontale de longueur T, l'image vidéo est avantageusement filtrée par un filtre dont la réponse F est la suivante :

$$F(x,y) = \sqrt{\int_{-T/2}^{+T/2}\left[\frac{\partial I}{\partial x}\right]^2 dx}$$

L'image filtrée est transformée en une image binaire par une opération de seuillage. Cette opération de seuillage consiste généralement à comparer la valeur de chaque pixel de l'image de gradients somme avec une valeur seuil, et à attribuer la valeur de niveau de gris V1 à tous les pixels dont le gradient somme est supérieure ou égale à la valeur seuil et la valeur de niveau de gris V2 aux autres pixels de l'image.

Elle peut également consister à comparer la valeur de chaque pixel de l'image de gradients somme avec deux valeurs seuil, $K_b$ et $K_h$ avec $K_h > K_b$, à attribuer la valeur de niveau de gris V1 aux pixels dont le gradient somme est supérieure ou égale à la valeur seuil $K_h$ et aux pixels, dont le gradient somme est compris entre $K_b$ et $K_h$, ayant une suite adjacente de p pixels consécutifs ayant un gradient somme supérieur ou égal à $K_h$ et à attribuer la valeur de niveau de gris V2 à tous les autres pixels de l'image.

Par ailleurs, l'étape de traitement de morphologie mathématique de l'image binaire comprend principalement:

- une étape de dilatation avec un élément structurant donné suivie d'une étape d'érosion avec le même élément structurant pour réduire le bruit dans l'image binaire, et
- une étape de dilatation horizontale et conditionnelle pour transformer en pixels de texte les pixels de non texte situés entre deux pixels de texte consécutifs appartenant à la même ligne dans l'image binaire lorsque les deux pixels de texte consécutifs sont distants horizontalement au plus de N pixels.

A la fin de cette étape, les zones de texte sont avantageusement étendues à leurs rectangles englobants.

Enfin, lorsque le procédé de détection est appliqué à une séquence d'images vidéo, il comporte en outre les étapes suivantes :

- déterminer, pour chaque zone de texte, la liste des images vidéo dans lesquelles elle apparaît,
- générer, pour chaque zone de texte et pour chaque image vidéo de ladite liste associée, une image dilatée de ladite zone de texte,
- générer, pour chaque zone de texte, une image améliorée de ladite zone de texte à partir desdites images dilatées de ladite zone de texte, et
- appliquer une étape de reconnaissance de caractères sur chacune desdites images améliorées pour extraire le texte qui y est contenu.

L'invention concerne également un dispositif de détection de zones de texte dans une image vidéo, caractérisé en ce qu'il comporte :

- des moyens de calcul pour calculer le gradient horizontal de l'intensité de chaque pixel de ladite image vidéo et additionner, pour chaque pixel de ladite image vidéo, les gradients horizontaux des pixels appartenant à une fenêtre d'intégration horizontale englobant le pixel considéré de manière à générer une image de gradients somme,
- des moyens de seuillage pour transformer ladite image de gradients somme en une image binaire, lesdits moyens de seuillage comparant la valeur de gradient somme de chaque pixel de l'image de gradients somme avec au moins une valeur seuil, pour attribuer à chaque pixel soit la valeur de niveau de gris V1 représentatif d'un pixel texte appartenant à une zone texte, soit la valeur de niveau de gris V2 représentatif d'un pixel non texte n'appartenant pas à une zone de texte, de manière à obtenir une image binaire comportant des pixels de texte ayant une valeur de niveau de gris V1 et des pixels de non texte ayant une valeur de niveau de gris V2, les pixels de texte voisins définissant des zones de texte, et
- des moyens de traitement mathématique pour appliquer, ligne par ligne, un traitement de morphologie mathématique à ladite image binaire afin de raccorder pour n'en faire qu'une seule les zones de texte distantes horizontalement au plus de N pixels.

D'autres caractéristiques et avantages de l'invention apparaîtront à la lecture de la description détaillée qui suit et qui est faite en référence aux dessins annexés, parmi lesquels :

- la figure 1 représente les étapes du procédé de détection de texte dans une image vidéo selon l'invention;
- la figure 2 illustre le calcul du ou des seuils pour l'opération de seuillage employée dans l'étape de binarisation du procédé de détection de texte selon l'invention;
- les figures 3A et 3B illustrent une étape du procédé ayant pour fonction d'étendre, dans certains cas particuliers, les zones de texte détectées par le procédé de l'invention;
- les figures 4A à 4E montrent des résultats intermédiaires et le résultat final du procédé de détection de l'invention;
- la figure 5 représente un organigramme des étapes appliquées à une séquence d'images vidéo pour extraire le texte contenu dans ces images;
- la figure 6 illustre la génération d'une image vidéo avec un contenu amélioré, notamment dilaté par interpolation; et
- la figure 7 montre 3 images, une image originale comprenant une zone de texte, une image dilatée obtenue par interpolation de ladite image originale et l'image finale de cette zone de texte obtenue par intégration de 69 images vidéo.

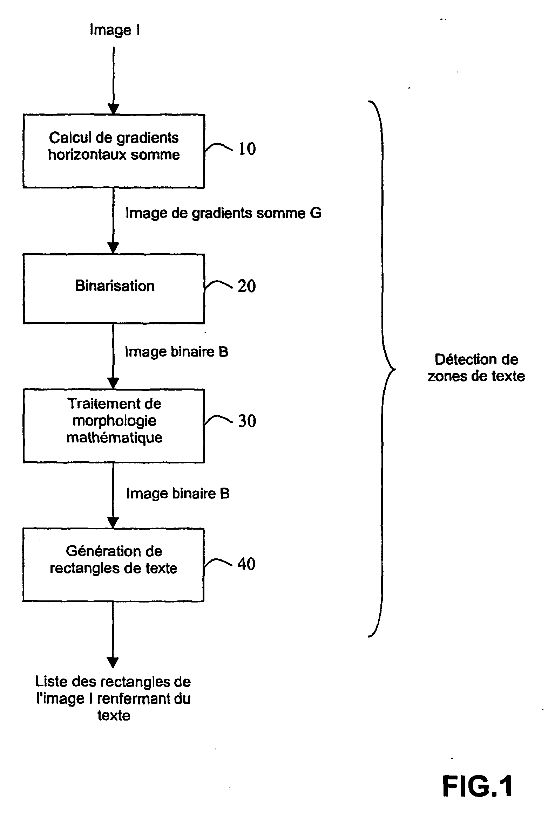

Le procédé de l'invention est appliqué à une image vidéo de départ notée I. La figure 1 montre les étapes du procédé de l'invention.

Selon une première étape du procédé de l'invention, on calcule un gradient horizontal pour chaque pixel de l'image I et on additionne au gradient horizontal de chaque pixel les gradients horizontaux de pixels environnants appartenant à la même ligne de l'image I afin de détecter des zones de l'image susceptibles d'être des zones de texte. Cette étape s'appuie sur le fait que les zones de texte sont généralement des zones de forts gradients et que les caractères d'un texte forment une texture régulière contenant des contours verticaux allongés horizontalement. Cette étape de calcul et de sommation des gradients horizontaux est réalisée par un filtre dont la réponse F est :

$$F(x, y) = \sqrt{\int_{-T/2}^{+T/2}\left[\frac{\partial I}{\partial x}\right]^2 dx}$$

où T définit la taille de la fenêtre des gradients qui sont additionnés ensemble. Le gradient résultant est appelé gradient somme. La valeur du paramètre T dépend de la taille des caractères du texte à détecter et du contraste de l'image. Le gradient horizontal est par exemple calculé par un détecteur standard de contours de type Prewitt, Sobel, Deriche ou équivalents. A l'issue de cette étape de filtrage, on dispose alors d'une image G de gradients somme de la taille de l'image I et dans laquelle à chaque pixel est associé le gradient somme calculé par le filtre.

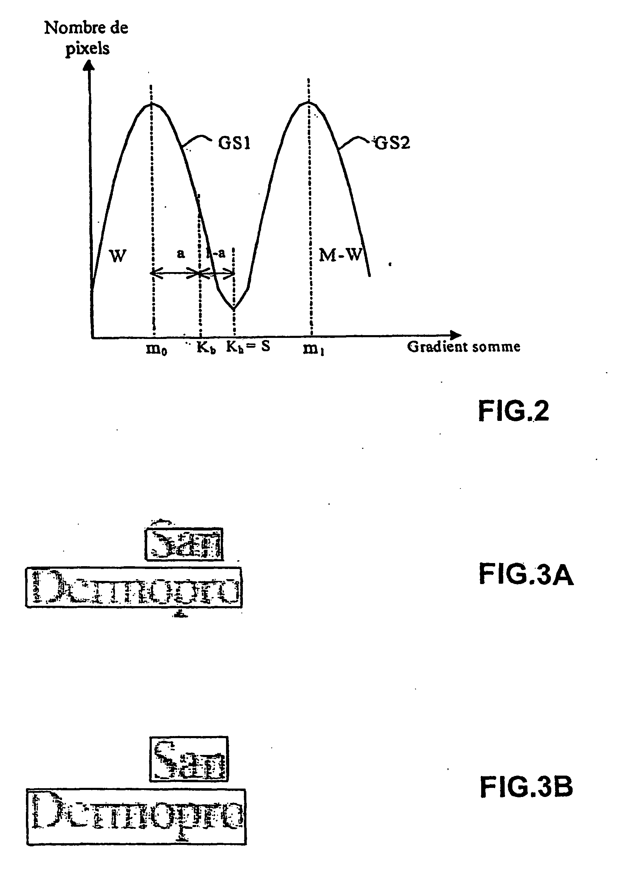

Cette étape de filtrage, référencée 10 sur la figure 1, est suivie d'une étape de binarisation 20 visant à transformer l'image G en une image binaire B. Cette étape est effectuée par une opération de seuillage optimisant le critère de Fisher S. La figure 2 illustre cette opération de seuillage et représente un histogramme des gradients somme de l'image G. L'axe des abscisses représente les gradients somme et l'axe des ordonnées le nombre de pixels de l'image G. Cet histogramme fait apparaître deux distributions gaussiennes, l'une GS1 se rapportant aux zones de non-texte de l'image I et l'autre GS2 aux zones de texte. On définit le seuil S comme étant la valeur maximale de l'expression suivante :

$$S = \max\left[\frac{W}{M}\left(1 - \frac{W}{M}\right)(m_1 - m_0)^2\right]$$

où

- M représente l'aire totale de l'histogramme,
- W représente l'aire totale de la gaussienne GS1,
- $m_0$ est la valeur moyenne des gradients somme de la gaussienne GS1, et
- $m_1$ est la valeur moyenne des gradients somme de la gaussienne GS2.

Les pixels de l'image G dont la valeur de gradient somme est inférieure à la valeur seuil S sont alors définis comme n'appartenant pas à une zone de texte. On parle alors de pixels de non-texte. Un niveau gris V1 égal à 0 leur est attribué. Les autres pixels de l'image G dont la valeur de gradient somme est supérieure ou égale à la valeur seuil S sont définis comme appartenant à une zone de texte et un niveau de gris V2 égal à 255 leur est attribué. On parle alors de pixels de texte.

Avantageusement, afin de rendre le résultat moins sensible au choix de la valeur seuil S, on emploie une technique de seuillage à seuil double comparable au mécanisme d'hystérésis dans la détection de contours. Le seuil S précédemment défini est pris comme seuil haut et noté $K_h$. On définit par ailleurs un seuil bas $K_b$ par la relation suivante :

$$K_b = m_0 + a \times (K_h - m_0)$$

Le paramètre a permet de contrôler la valeur seuil $K_b$. Sur la figure 2, cette valeur seuil est située entre la valeur moyenne m0 et la valeur seuil $K_h$. L'étape de binarisation s'effectue dans le cas d'un seuillage à double seuil de la manière suivante:

- comme précédemment, tous les pixels dont la valeur de gradient somme est supérieure ou égale à $K_h$ sont des pixels de texte; un niveau de gris égal à 255 leur est attribué;
- tous les pixels dont la valeur de gradient somme est inférieure à $K_b$ sont des pixels de non-texte; un niveau de gris égal à 0 leur est attribué;
- enfin, tous les pixels dont la valeur de gradient somme est comprise entre les seuils $K_b$ et $K_h$ sont des pixels de texte s'il existe une suite de p pixels dont la valeur de gradient somme est supérieure ou égale à $K_h$ qui leur est adjacente. Le paramètre p est par exemple égal à 8.

L'image G après binarisation devient donc une image binaire B comportant des pixels de niveau de gris égal à 255 représentant des pixels de texte et des pixels de niveau de gris égal à 0 représentant des pixels appartenant à des zones de non texte.

Dans cette image binaire, des zones de texte Ci regroupant des pixels de texte voisins sont définies. Une zone de texte peut ainsi renfermer par exemple les pixels de texte formant un caractère de texte.

Selon une caractéristique importante de l'invention, plusieurs opérations de morphologie mathématique 30 sont alors opérées sur l'image binaire B pour réduire les bruits dans l'image et raccorder les zones de texte distantes horizontalement au plus de N pixels pour ne former qu'une seule zone de texte.

La première étape de morphologie mathématique a pour but de réduire les bruits dans l'image binaire B. Cette étape consiste à effectuer une opération de dilatation de l'image avec un élément structurant E puis une opération d'érosion de cette image avec le même élément structurant. L'élément structurant est par exemple

$$E = \begin{bmatrix} 1 & 1 & 1 \\ 1 & 1 & 1 \\ 1 & 1 & 1 \end{bmatrix}$$

On rappelle qu'une opération de dilatation consiste à remplacer la valeur de chaque pixel de l'image B par la valeur maximale des pixels contenus dans l'élément structurant associé, l'élément structurant étant centré sur le pixel considéré. De même, une opération d'érosion consiste à remplacer la valeur de chaque pixel de l'image B par la valeur minimale des pixels contenus dans l'élément structurant associé, l'élément structurant étant centré sur le pixel considéré.

L'image B est ensuite avantageusement traitée pour supprimer les ponts entre les zones de texte (ces ponts peuvent correspondre à des liaisons entre caractères de texte ou à du bruit). Ces ponts peuvent être assimilés à des zones de texte de faible hauteur. Un exemple de programme informatique est donné ci-après pour supprimer les zones de texte dont la hauteur est inférieure à $m_1$ dans l'image binaire.

```
Soit une matrice A de la taille de l'image binaire B
Pour toutes les colonnes de l'image binaire B:
début
 Hauteur_courante = 0
 Pour tous les pixels B(x,y) de la colonne x du haut vers le bas
 début
   Si le pixel B(x,y) est un pixel de texte alors
     Hauteur_courante = Hauteur_courante+1
     A(x,y) = Hauteur_courante
   Sinon
     Hauteur_courante = 0
     A(x,y) = 0
 fin
 valeur_maximale = 0
 Pour tous les pixels B(x,y) de la colonne x du bas vers le haut
 début
   Si le pixel B(x,y) est un pixel de texte alors
    valeur_maximale = max(valeur_maximale, A(x,y))
   Sinon
    valeur_maximale = 0
   A(x,y) = valeur_maximale
  fin
 fin
```

tous les pixels de texte B(x,y) de l'image B dont $A(x,y) < m_1$ sont exclus de l'ensemble des pixels de texte.

Une deuxième étape de morphologie mathématique est ensuite appliquée à l'image binaire résultante pour raccorder les zones de texte se rapportant à un même mot ou une même phrase. Cette étape est une étape de dilatation horizontale et conditionnelle.

Pour réaliser ces étapes, on définit :

- une matrice J de la taille de l'image I associant à chaque pixel de l'image B un numéro de zone de texte:

$$\text{si } B(x,y) \in C_i \qquad J(x,y) = i$$

$$\text{si } \forall i \quad B(x,y) \notin C_i \quad \begin{cases} J(x,y) = j \text{ s'il existe } j = \min_u \{u > x \text{ et } B(u,y) \in C_u\} \\ J(x,y) = 0 \qquad \text{sinon} \end{cases}$$

- une matrice H telle que

$$\text{si} \ \ B(x,y) \in C_i \qquad H(x,y) = h(C_i)$$
$$\text{avec } h(C_i) = \max_{y}\big((x,y) \in C_i\big) - \min_{y}\big((x,y) \in C_i\big)$$

$$\text{si } \forall i \quad B(x,y) \notin C_i \quad H(x,y) = 0$$

- une matrice H' telle que :

$$\text{si } H(x,y) \neq 0 \quad H'(x,y) = H(x,y)$$

$$\text{si } H(x,y) = 0 \quad \begin{cases} H'(x,y) = H(z,y) & \text{s'il existe } \ z = \min_{u}\{u > x \ \text{ et } \ H(u,y) > 0\} \\ H'(x,y) = 0 & \text{sin on} \end{cases}$$

Chaque terme H'(x,y) de la matrice H' renferme la hauteur maximale de la zone de texte Ci auquel appartient le pixel B(x,y) ou la hauteur maximale de la zone de texte Cj qui suit dans la ligne y de l'image B s'il en existe une.

L'opération de dilation horizontale et conditionnelle consiste à transformer, ligne par ligne, les pixels de non texte situés entre deux zones de texte (gauche et droite) séparées au maximum de N pixels en pixels de texte. Il en résulte que deux zones de texte espacées au plus de N pixels sont raccordées pour ne former qu'une seule zone de texte. Cette opération utilise les matrices J et H'. Un exemple d'algorithme de dilatation horizontale et conditionnelle est fourni ci-après.

De préférence, on prévoit des contraintes supplémentaires pour autoriser le raccordement de deux zones de texte, gauche et droite, en une zone de texte globale:

- la différence de hauteur entre la zone de texte gauche et la zone de texte droite doit être inférieure à la plus petite hauteur des zones de texte gauche et droite, soit:

$$h(C_i) - h(C_j) < \min\big(h(C_i), h(C_j)\big)$$

- La différence de hauteur entre la zone de texte globale et la zone de texte gauche doit être inférieure à la plus petite hauteur des zones de texte gauche et droite, soit:

$$h(C_i \cup C_j) - h(C_i) < \min\big(h(C_i), h(C_j)\big)$$

avec

$$h\big(C_i \cup C_j\big) = \max_{y}\big((x,y) \in \{C_i \cup C_j\}\big) - \min_{y}\big((x,y) \in \{C_i \cup C_j\}\big)$$

L'algorithme de dilatation horizontale et conditionnelle est par exemple le suivant:

{dilatation horizontale et conditionnelle}

N = 16

Pour toutes les lignes de l'image binaire:

Début

    Nb_dilatations = N

    Pour tous les pixels B(x,y) de la ligne y de la matrice B et de la gauche vers la droite

    Début

        Si B(x,y) ≠0 (le pixel est un pixel de texte)

            Nb_dilatations = 0

            Hauteur_gauche = H'(x,y)

            Id_gauche = J(x,y)

        Sinon (le pixel n'est pas un pixel de texte)

            Si Nombre_dilatations < N (le pixel est à une distance inférieure à N de la zone de texte gauche)

        Début

            Hauteur_nouvelle =

$$h(C_i \cup C_j) = \max_y((x,y) \in \{C_i \cup C_j\}) - \min_y((x,y) \in \{C_i \cup C_j\})$$

            Si Id_gauche = J(x,y) alors

                Nb_dilatations = N (le pixel appartient déjà à une zone de texte)

        fin

        sinon

            Si Hauteur_gauche – H'(x,y) < min(Hauteur_gauche,H'(x,y)) alors

                Nb_dilatations = N (trop de différence de hauteur entre les 2 zones de texte)

            fin

        sinon

            Si Hauteur_nouvelle - Hauteur_gauche < min(Hauteur_gauche,H'(x,y))

                alors Nb_dilatations = N (trop de différence de hauteur entre la zone de texte globale et la zone de texte gauche)

            fin

        sinon

            B(x,y) = un_niveau_de_gris_réservé

            Nb_dilatations = Nb_dilatations + 1

        Fin

    Fin

Fin

**Pour toutes les lignes:**
**Début**
    Nb_erosions= N
    Pour tous les pixels B(x,y) de la ligne y de la droite vers la gauche
    **Début**
        Si le pixel B(x,y) = un_niveau_de_gris_réservé (il est entre 2 zones de texte à 16 pixels au maximum de la zone de texte gauche)
      **Début**
        Si Nb_erosions< N (il n'est pas adjacent à une zone de texte)
      **Début**
        B(x,y) = 0 (distance trop grande entre 2 caractères)
        Nb_erosions= Nb_erosions + 1
      **Fin**
    **Fin** ·
    Sinon (le pixel est à plus de 16 pixels d'une zone de texte ou appartient à une zone de texte)
    **Début**
        Si le pixel B(x,y) = 255   alors   Nb_erosions = N
        Sinon Nb_erosions = 0 (distance trop grande avec la zone de texte de gauche)
    **Fin**
      **Fin**
**Fin**
**Pour toutes les lignes**
**Pour tous les pixels de la ligne**
si B(x,y) = un_niveau_de_gris_réservé  alors  B(x,y) = 255

Il est possible d'exécuter ensuite une autre opération de dilatation/érosion pour supprimer le bruit engendré par l'opération de dilatation horizontale et conditionnelle dans l'image binaire. Cette nouvelle opération de dilatation/ érosion est effectuée avec un élément structurant du type [111], le même élément structurant étant utilisé à la fois pour la dilatation et l'érosion.

Après cette phase de traitement de morphologie mathématique, chaque zone de texte est de préférence étendue au rectangle l'englobant (étape 40 de la figure

1). Les rectangles de texte ne satisfaisant pas aux contraintes géométriques suivantes sont par ailleurs supprimées :

-    un rectangle doit comporter au moins 10 pixels de texte;
-    le rapport largeur/hauteur du rectangle doit être supérieur à une valeur seuil g1 (avec g1>1);
-    le taux de remplissage du rectangle de texte par rapport à la zone de texte incluse dans ce rectangle doit être supérieur à une valeur seuil g2, à savoir

$$\frac{\text{aire de la zone de texte}}{\text{aire du rectangle}} > g_2$$

Les traits aux extrémités des caractères, comme la barre supérieure du caractère "t" et la barre inférieure du p, et la partie supérieure d'un caractère en majuscule au début d'un mot sont généralement reconnus dans l'image binaire B en tant que pixels de texte par le filtre de réponse F mais sont ensuite exclus de manière générale des zones de texte lors du traitement de morphologie mathématique. Aussi, il est recommandé de rechercher ces cas particuliers dans l'image binaire B puis d'agrandir les rectangles de texte obtenus après le traitement morphologique pour qu'ils englobent les pixels correspondant à ces cas particuliers. Un exemple est donné aux figures 3A et 3B. La figure 3A montre les rectangles de texte obtenus après traitement morphologique pour le mot "San Dermopro". La partie supérieure de la lettre majuscule S est exclus du rectangle de texte englobant le mot San. De même, la partie inférieure de la lettre p est exclus du rectangle de texte englobant le mot Dermopro. Ces deux rectangles sont donc étendus pour inclure ces deux parties. La figure 3B montre les rectangles obtenus après extension.

L'étape finale de la détection des zones de texte consiste à combiner ensemble les rectangles de texte afin d'en limiter leur nombre. Il est par exemple possible de fusionner les rectangles de texte qui se recouvrent partiellement ou de supprimer les rectangles de texte qui sont inclus dans d'autres rectangles de texte. De préférence, deux rectangles de texte se recouvrant partiellement sont fusionnés en un rectangle de plus grande dimension si :

$$\frac{O}{S} < i_1$$

ou

$$\left( \frac{S}{B} < i_2 \quad \text{ET} \quad \frac{O}{S} < i_3 \right)$$

où

- O est l'aire de la zone de non recouvrement du petit rectangle,
- S est l'aire du petit rectangle,
- B est l'aire du plus grand rectangle, et
- $i_1$, $i_2$ et $i_3$ sont des valeurs seuil.

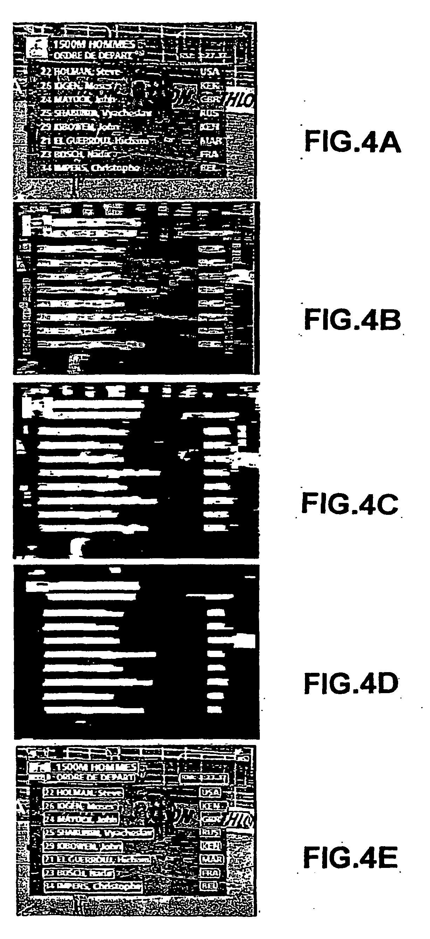

Le résultat de la détection est donc une liste de rectangles de texte. Les figures 4A à 4E illustrent les étapes du procédé de l'invention. L'image de départ I est extraite d'une émission de sport (figure 4A). L'image des gradients somme (figure 4B) montre la forte réponse du filtre sur les zones du texte de l'image I, mais également sur les endroits avec de forts gradients structurés régulièrement. Bien que ce bruit reste présent dans l'image binaire (figure 4C), la phase de morphologie mathématique a réussi à le supprimer (figure 4D). Les rectangles de texte finaux sont montrés à la figure 4E.

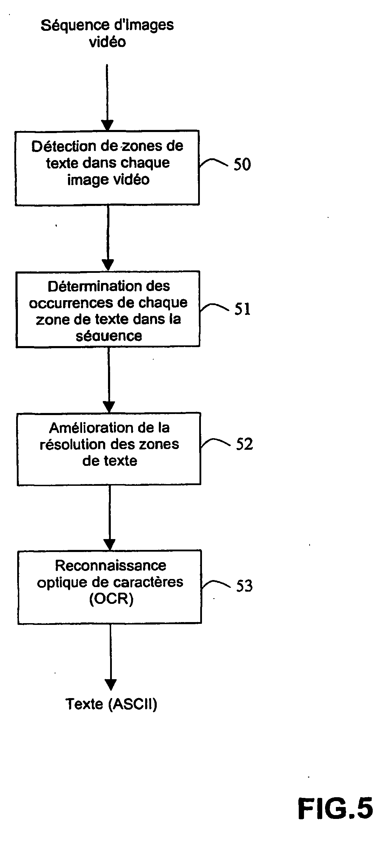

Ce procédé de détection peut être appliqué à une séquence d'images vidéo. La figure 5 représente les étapes qui sont alors appliquées à la séquence d'images vidéo. Un première étape de détection de zones de texte 50 est effectuée pour chaque image vidéo de façon à obtenir une liste de rectangles de texte pour chaque image de la séquence. Ces listes de rectangles de texte sont ensuite traitées (étape 51) pour déterminer les occurrences de chaque rectangle de texte dans la séquence d'images vidéo, une occurrence d'un rectangle de texte signifiant ici une apparition dudit rectangle de texte dans une image vidéo, par exemple, 10 occurrences d'un rectangle de texte correspondant à une apparition dudit rectangle de texte dans 10 images vidéo de la séquence.

En pratique, une liste L de rectangles de texte est définie pour la première image vidéo de la séquence. Cette liste L est mémorisée. Pour chaque image $I_i$ autre que la première image de la séquence, la liste $L_i$ de rectangles de texte associée est comparée avec la liste L. La liste L est complétée au fur et à mesure qu'un nouveau rectangle de texte est repéré dans une liste Li et, pour chaque rectangle de texte de la liste L finale est définie une liste des images dans lesquelles est présent ce rectangle de texte. Pour réaliser cette étape, des mesures de recouvrement des rectangles de texte sont effectuées. Un rectangle de texte R de la liste L est considérée comme présent dans l'image Ii si l'image Ii comporte un rectangle de texte Ri tel que les rectangles de texte R et Ri se recouvrent sur au moins 50% du plus petit des deux rectangles de texte.

Les rectangles de texte de la liste L présents dans un faible nombre d'images sont supprimés de la liste L. Ces rectangles de texte sont en effet alors considérés comme des "fausses alarmes". Les rectangles qui sont conservés dans la liste L doivent répondre aux critères suivants :

- le nombre d'images LEN séparant la première occurrence et la dernière occurrence d'un rectangle de texte R dans la séquence d'images considérée doit être supérieure à un nombre prédéfini d'images NBIm;
- le nombre d'images MISS de la séquence d'images de longueur LEN où l'occurrence du rectangle de texte R manque doit vérifier l'inégalité suivante

$$\frac{MISS}{LEN} < Smiss$$

où Smiss est une valeur seuil de pourcentage.

Pour qu'un outil classique de reconnaissance optique de caractères OCR (pour Optical Character Recognition en langue anglaise) soit en mesure d'extraire le texte contenus dans les rectangles de texte, il est préférable d'améliorer la qualité de représentation des parties d'image contenues dans ces rectangles de texte (étape 52 dans la figure 5). Selon l'invention, on propose donc de créer une image dilatée de chaque rectangle de texte R de la liste finale L à partir des images comportant le rectangle de texte R.

Pour réaliser cette étape, on effectue les mesures statistiques suivantes pour les pixels (i,j) du plus grand rectangle R de chaque occurrence de texte:

- une moyenne

$$M_{i,j} = \frac{\sum_{t=1}^{t=NIm} I_{i,j,t}}{N\,Im}$$

- un écart type

$$V_{i,j} = 1 + \sqrt{\frac{\sum_{t=1}^{t=NIm} I_{i,j,t}^2}{N\,Im} - M_{i,j,t}^2}$$

où

- NIm est le nombre d'images I comportant le rectangle de texte R, et
- i, j, t est un pixel du rectangle de texte R de coordonnées i et j dans l'image $I_t$.

Avec ces mesures, on crée, pour chaque image $I_t$ où apparaît le rectangle de texte R, une image interpolée $I_{int}(t)$. A cet effet, un coefficient de pondération $g_{ijt}$ est calculé pour chaque point i,j du rectangle de texte R de l'image $I_t$ :

$$g_{i,j,t} = \frac{1}{1 + \frac{\left| I_{i,j,t} - M_{i,j} \right|}{V_{i,j}}}$$

La valeur de niveau de gris d'un point P de coordonnées i+$\alpha$, j+$\beta$ dans l'image interpolée $I_{int}(t)$ est alors calculée de la manière suivante:

$$I_{i+\alpha,j+\beta,t} = \frac{\left[ \begin{array}{c} (1-\alpha)(1-\beta)g_{i,j,t}I_{i,j,t} + \alpha(1-\beta)g_{i+1,j,t}I_{i+1,j,t} \\ + \alpha\beta\, g_{i+1,j+1,t}I_{i+1,j+1,t} + (1-\alpha)\beta g_{i,j+1,t}I_{i,j+1,t} \end{array} \right]}{(1-\alpha)(1-\beta)g_{i,j,t} + \alpha(1-\beta)g_{i+1,j,t} + \alpha\beta\, g_{i,j+1,t} + (1-\alpha)\beta g_{i+1,j+1,t}}$$

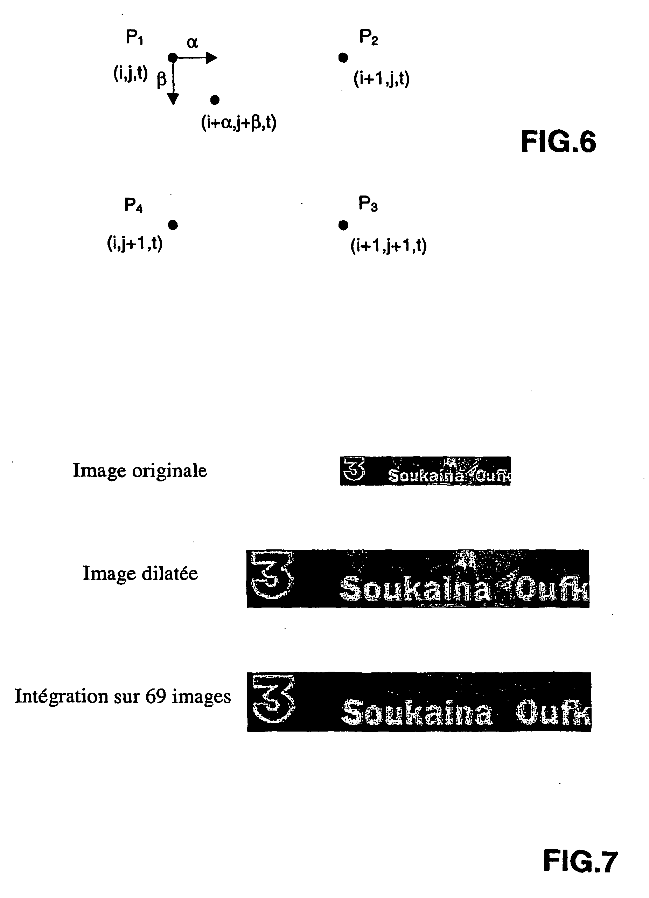

Les paramètres $\alpha$ et $\beta$ employés dans cette égalité sont définis sur la figure 6. Cette figure montre 4 pixels voisins $P_1$, $P_2$, $P_3$ et $P_4$ dans une image $I_t$. Les coordonnées respectives de ces quatre points dans l'image It sont : (i, j), (i+1,j), (i+1, j+1) et (i, j+1). On a $(\alpha,\beta) \in [0,1]$. Dans l'exemple de la figure 6, $\alpha$ = 1/4 et $\beta$ = 1/4. Dans cet exemple d'interpolation, on crée 16 pixels dans l'image interpolée à partir de 4 pixels voisins dans l'image $I_t$. Le facteur d'interpolation est donc égal à 4.

Toutes les images dilatées obtenues par interpolation sont ensuite utilisées pour générer une image de qualité de représentation élevée qui pourra alors être traitée correctement avec un outil d'OCR (étape 53 de la figure 5) pour extraire le texte qui y est contenu. Cette image de qualité, Q, de représentation élevée est par exemple obtenue en faisant la moyenne des images dilatées:

$$Q_{i,j} = \frac{\sum_{t=1}^{t=N\,Im} I_{i,j,int(t)}}{N\,Im}$$

où Nim est le nombre d'images dilatées.

La figure 7 montre une partie d'une image vidéo originale comportant du texte, une image dilatée de ladite image et l'image finale obtenue par intégration de 69 images dilatées comportant ledit texte.

Les paramètres utilisés pour la mise en oeuvre d'un mode de réalisation préférentiel du procédé de l'invention sont donnés ci-après:

Détection du texte
Filtre de détection de texte:

    implémentation du gradient horizontal       Sobel

Accumulation du gradient:

    taille de la fenêtre d'accumulation       13 pixels

Binarisation : paramètre a       0.87
Morphologie mathématique:

- Seuil $m_1$ pour la suppression des ponts       2 pixels
- Facteur de dilatation N pour le raccordement des zones de texte       16 pixels

Vérification des contraintes géométriques

- Nombre minimum de pixels de texte du rectangle de texte       10 pixels
- Forme minimum $g_1$       1.2
- Taux de remplissage minimum de la zone de texte $g_2$       0.3
  Intégration des rectangles:
- Seuils pour les différents taux $i_1$, $i_2$, $i_3$ 0.1, 0.2,       0.7
- Suivi de texte:
  Recouvrement minimum       50%
  Nombre maximum d'images sans rectangles       5 images
- Suppression des fausses alarmes:
  Longueur minimum des occurrences prises en compte: NbIm       40 images
  Pourcentage maximum d'images manquantes par rapport à la longueur de l'occurrence : Smiss       40%
- Amélioration de l'image:
  Facteur d'interpolation       4

Le procédé de l'invention peut être utilisé pour déterminer le contenu sémantique d'images d'une base de données audiovisuelles en vue de leur indexation. Il peut être également utilisé dans un système de recherche de données lorsque la requête est une image. Tout ou partie de ce procédé peut être mis en oeuvre sur un ordinateur personnel, un terminal fixe ou mobile, ou un serveur multimédia accessible à une pluralité d'utilisateurs.

L'invention concerne un dispositif comportant des moyens pour mettre en oeuvre les étapes de ce procédé.

Ce procédé est plus particulièrement destiné à détecter des zones de texte s'étendant horizontalement. Bien entendu, le procédé peut être utilisé pour détecter des zones de texte s'étendant selon une direction quelconque. Il suffit alors de calculer, non pas le gradient horizontal de chaque pixel, mais le gradient de chaque pixel selon la direction choisie et d'additionner lesdits gradients appartenant une fenêtre s'étendant selon cette même direction. De même, l'étape de dilation horizontale et conditionnelle est alors remplacée par une étape de dilatation conditionnelle selon la direction choisie.

## Revendications

1. Procédé de détection de zones de texte dans une image vidéo, **caractérisé en ce qu'**il comporte les étapes suivantes :

   - calculer le gradient horizontal de l'intensité de chaque pixel de ladite image vidéo et additionner, pour chaque pixel de ladite image vidéo, les gradients horizontaux des pixels appartenant à une fenêtre d'intégration horizontale englobant le pixel considéré de manière à générer une image de gradients somme (G),
   - transformer ladite image de gradients somme (G) en une image binaire (B) par une opération de seuillage consistant à comparer la valeur de gradient somme de chaque pixel de l'image de gradients somme avec au moins une valeur seuil, pour attribuer à chaque pixel soit la valeur de niveau de gris V1 représentatif d'un pixel texte appartenant à une zone texte, soit la valeur de niveau de gris V2 représentatif d'une pixel non texte n'appartenant pas à une zone de texte, de manière à obtenir une image binaire comportant des pixels de texte ayant une valeur de niveau de gris V1 et des pixels de non texte ayant une valeur de niveau de gris V2, les pixels de texte voisins définissant des zones de texte, et
   - appliquer, ligne par ligne, un traitement de morphologie mathématique à ladite image binaire afin de raccorder pour n'en faire qu'une seule les zones de texte distantes horizontalement au plus de N pixels.

2. Procédé selon la revendication 1, **caractérisé en ce que**, pour calculer le gradient horizontal de chaque pixel de coordonnées (x,y) dans ladite image vidéo et additionner entre eux les gradients horizontaux des pixels appartenant à une fenêtre d'intégration horizontale de longueur T, ladite image vidéo est filtrée par un filtre dont la réponse F est la suivante :

$$F(x, y) = \sqrt{\int_{-T/2}^{+T/2} \left[ \frac{\partial I}{\partial x} \right]^2 dx}$$

3. Procédé selon la revendication 1 ou 2, **caractérisé en ce que** ladite opération de seuillage consiste à comparer la valeur de chaque pixel de l'image de gradients somme avec une valeur seuil ($K_h$), et à attribuer la valeur de niveau de gris V1 à tous les pixels dont le gradient somme est supérieure ou égale à la valeur seuil ($K_h$) et la valeur de niveau de gris V2 aux autres pixels de l'image.

4. Procédé selon la revendication 1 ou 2, **caractérisé en ce que** ladite opération de seuillage consiste à comparer la valeur de chaque pixel de l'image de gradients somme (G) avec deux valeurs seuil, $K_b$ et $K_h$ avec $K_h > K_b$, et à attribuer la valeur de niveau de gris V1 aux pixels dont le gradient somme est supérieure ou égale à la valeur seuil $K_h$ et aux pixels, dont le gradient somme est compris entre $K_b$ et $K_h$, ayant une suite adjacente de p pixels consécutifs ayant un gradient somme supérieur ou égal à $K_h$ et à attribuer la valeur de niveau de gris V2 à tous les autres pixels de l'image.

5. Procédé selon l'une quelconque des revendications 1 à 4, **caractérisé en ce que** l'étape de traitement de morphologie mathématique de l'image binaire (B) comprend:

   - une étape de dilatation avec un élément structurant (E) donné suivie d'une étape d'érosion avec le même élément structurant (E) pour réduire le bruit dans l'image binaire (B), et
   - une étape de dilatation horizontale et conditionnelle pour transformer en pixels de texte les pixels de non texte situés entre deux pixels de texte consécutifs appartenant à la même ligne dans l'image binaire (B) lorsque les deux pixels de texte consécutifs sont distants horizontalement au plus de N pixels.

**6.** Procédé selon la revendication 5, **caractérisé en ce que** l'étape de traitement de morphologie mathématique comprend en outre une dernière étape de dilatation avec un élément structurant donné suivie par une dernière étape de dilatation pour réduire le bruit dans l'image binaire issue de l'étape de dilatation horizontale et conditionnelle.

**7.** Procédé selon l'une des revendications 1 à 6, **caractérisé en ce que** les zones de texte sont étendues aux rectangles les englobant.

**8.** Procédé selon l'une des revendications précédentes appliqué à une séquence d'images vidéo, **caractérisé en ce qu'**il comporte en outre :

- déterminer, pour chaque zone de texte, la liste des images vidéo dans lesquelles elle apparaît,
- générer, pour chaque zone de texte et pour chaque image vidéo de ladite liste associée, une image dilatée de ladite zone de texte,
- générer, pour chaque zone de texte, une image améliorée de ladite zone de texte à partir desdites images dilatées de ladite zone de texte, et
- appliquer une étape de reconnaissance de caractères sur chacune desdites images améliorées pour extraire le texte qui y est contenu.

**9.** Procédé selon la revendication 8, **caractérisé en ce que**, pour générer une image dilatée d'une zone de texte, on calcule une moyenne statistique sur les images de liste associée à cette zone de texte et un écart type pour chaque pixel de ladite zone de texte et on génère une image dilatée par interpolation des pixels de ladite zone de texte en utilisant la moyenne statistique et l'écart type des pixels de cette zone de texte.

**10.** Procédé selon la revendication 8 ou 9, **caractérisé en ce qu'**il est utilisé pour déterminer le contenu sémantique d'images dans une base de données audiovisuelles en vue de leur indexation.

**11.** Procédé selon la revendication 8 ou 9, **caractérisé en ce qu'**il est utilisé pour traiter une image vidéo servant de requête dans un système de recherche de données.

**12.** Procédé selon l'une des revendications précédentes, **caractérisé en ce que** lesdites étapes du procédé, ou une partie d'entre elles, sont mises en oeuvre sur un ordinateur individuel, un terminal fixe ou mobile, ou un serveur multimédia accessible par une pluralité d'utilisateurs.

**13.** Dispositif de détection de zones de texte dans une image vidéo, **caractérisé en ce qu'**il comporte :

- des moyens de calcul pour calculer le gradient horizontal de l'intensité de chaque pixel de ladite image vidéo et additionner, pour chaque pixel de ladite image vidéo, les gradients horizontaux des pixels appartenant à une fenêtre d'intégration horizontale englobant le pixel considéré de manière à générer une image de gradients somme (G),
- des moyens de seuillage pour transformer ladite image de gradients somme (G) en une image binaire (B), lesdits moyens de seuillage comparant la valeur de gradient somme de chaque pixel de l'image de gradients somme avec au moins une valeur seuil, pour attribuer à chaque pixel soit la valeur de niveau de gris V1 représentatif d'un pixel texte appartenant à une zone texte, soit la valeur de niveau de gris V2 représentatif d'un pixel non texte n'appartenant pas à une zone de texte, de manière à obtenir une image binaire comportant des pixels de texte ayant une valeur de niveau de gris V1 et des pixels de non texte ayant une valeur de niveau de gris V2, les pixels de texte voisins définissant des zones de texte, et
- des moyens de traitement mathématique pour appliquer, ligne par ligne, un traitement de morphologie mathématique à ladite image binaire afin de raccorder pour n'en faire qu'une seule les zones de texte distantes horizontalement au plus de N pixels.

**14.** Dispositif selon la revendication 13, **caractérisé en ce que**, pour calculer le gradient horizontal de chaque pixel de coordonnées (x,y) dans ladite image vidéo et additionner entre eux les gradients horizontaux des pixels appartenant à une fenêtre d'intégration horizontale de longueur T, lesdits moyens de calcul sont formés par un filtre dont la réponse F est la suivante :

$$F(x,y) = \sqrt{\int_{-T/2}^{+T/2}\left[\frac{\partial I}{\partial x}\right]^2 dx}$$

**15.** Dispositif selon la revendication 13 ou 14, **caractérisé en ce que** lesdits moyens de seuillage comparent la valeur de chaque pixel de l'image de gradients somme avec une valeur seuil ($K_h$), et attribuent la valeur de niveau de gris V1 à tous les pixels dont le gradient somme est supérieure ou égale à la valeur seuil ($K_h$) et la valeur de niveau de gris V2 aux autres pixels de l'image.

**16.** Dispositif selon la revendication 13 ou 14, **caractérisé en ce que** lesdits moyens de seuillage comparent la valeur de chaque pixel de l'image de gradients somme (G) avec deux valeurs seuil, $K_b$ et $K_h$ avec $K_h > K_b$, attribuent la valeur de niveau de gris V1 aux pixels dont le gradient somme est supérieure ou égale à la valeur seuil $K_h$ et aux pixels, dont le gradient somme est compris entre $K_b$ et $K_h$, ayant une suite adjacente de p pixels consécutifs ayant un gradient somme supérieur ou égal à $K_h$ et la valeur de niveau de gris V2 à tous les autres pixels de l'image.

**17.** Dispositif selon l'une quelconque des revendications 13 à 16, **caractérisé en ce que** les moyens de traitement mathématique opèrent les étapes de traitement de morphologie mathématique suivantes à l'image binaire (B):

- une étape de dilatation avec un élément structurant (E) donné suivie d'une étape d'érosion avec le même élément structurant (E) pour réduire le bruit dans l'image binaire (B), et
- une étape de dilatation horizontale et conditionnelle pour transformer en pixels de texte les pixels de non texte situés entre deux pixels de texte consécutifs appartenant à la même ligne dans l'image binaire (B) lorsque les deux pixels de texte consécutifs sont distants horizontalement au plus de N pixels.

**18.** Dispositif selon la revendication 17, **caractérisé en ce que** les moyens de traitement mathématique opèrent en outre une dernière étape de dilatation avec un élément structurant donné suivie par une dernière étape de dilatation pour réduire le bruit dans l'image binaire issue de l'étape de dilatation horizontale et conditionnelle.

**19.** Dispositif selon l'une des revendications 13 à 18, utilisé pour traiter une séquence d'images vidéo, **caractérisé en ce qu'**il comporte en outre :

- des moyens pour déterminer, pour chaque zone de texte, la liste des images vidéo dans lesquelles elle apparaît,
- des moyens pour générer, pour chaque zone de texte et pour chaque image vidéo de ladite liste associée, une image dilatée de ladite zone de texte,
- des moyens pour générer, pour chaque zone de texte, une image améliorée de ladite zone de texte à partir desdites images dilatées de ladite zone de texte, et
- des moyens de reconnaissance de caractères (OCR) pour extraire le texte contenu dans chacune desdites images améliorées.

**20.** Dispositif selon la revendication 19, **caractérisé en ce qu'**il est utilisé pour déterminer le contenu sémantique d'images dans une base de données audiovisuelles en vue de leur indexation.

## Claims

**1.** Method of detecting text fields in a video image, **characterized in that** it comprises the following steps:

- calculating the horizontal gradient of the intensity of each pixel of said video image and adding, for each pixel of said video image, the horizontal gradients of the pixels belonging to a horizontal integration window containing the pixel concerned so as to generate an aggregate gradients image (G),
- conveying said aggregate gradients image (G) into a binary image (B) by a thresholding operation consisting in comparing the aggregate gradient value of each pixel of the aggregate gradients image with at least one threshold value, to assign each pixel either the grey level value V1 representative of a text pixel belonging to a text field, or the grey level value V2 representative of a non-text pixel not belonging to a text field, so as to obtain a binary image comprising text pixels having a grey level value V1 and non-text pixels having a grey level value V2, the neighbouring text pixels defining text fields, and

- applying, line by line, a mathematical morphology processing to said binary image in order to join the text fields that are horizontally distant by no more than N pixels to make just one field.

2. Method according to Claim 1, **characterized in that**, to calculate the horizontal gradient of each pixel of coordinates (x, y) in said video image and add together the horizontal gradients of the pixels contained in a horizontal integration window of length T, said video image is filtered by a filter whose response F is as follows:

$$F(x, y) = \sqrt{\int_{-T/2}^{+T/2}\left[\frac{\partial I}{\partial x}\right]^2 dx}$$

3. Method according to Claim 1 or 2, **characterized in that** said thresholding operation consists in comparing the value of each pixel of the aggregate gradients image with a threshold value ($K_h$), and in assigning the grey level value V1 to all the pixels with an aggregate gradient greater than or equal to the threshold value ($K_h$) and the grey level value V2 to the other pixels of the image.

4. Method according to Claim 1 or 2, **characterized in that** said thresholding operation consists in comparing the value of each pixel of the aggregate gradients image (G) with two threshold values, $K_b$ and $K_h$ with $K_h>K_b$, and in assigning the grey level value V1 to the pixels with an aggregate gradient greater than or equal to the threshold value $K_h$ and to the pixels, with an aggregate gradient of between $K_b$ and $K_h$, having an adjacent series of p consecutive pixels having an aggregate gradient greater than or equal to $K_h$ and in assigning the grey level value V2 to all the other pixels of the image.

5. Method according to any one of Claims 1 to 4, **characterized in that** the step for mathematical morphology processing of the binary image (B) comprises:

   - an expansion step with a given structuring element (E) followed by an erosion step with the same structuring element (E) to reduce the noise in the binary image (B), and
   - a horizontal and conditional expansion step to convert into text pixels the non-text pixels located between two consecutive text pixels belonging to the same line in the binary image (B) when the two consecutive text pixels are horizontally distant by no more than N pixels.

6. Method according to Claim 5, **characterized in that** the mathematical morphology processing step also comprises a final expansion step with a given structuring element followed by a final expansion step to reduce the noise in the binary image deriving from the horizontal and conditional expansion step.

7. Method according to one of Claims 1 to 6, **characterized in that** the text fields are extended to the rectangles containing them.

8. Method according to one of the preceding claims, applied to a video image sequence, **characterized in that** it also comprises:

   - determining, for each text field, the list of the video images in which it appears,
   - generating, for each text field and for each video image of said associated list, an expanded image of said text field,
   - generating, for each text field, an enhanced image of said text field from said expanded images of said text field, and
   - applying a character recognition step to each of said enhanced images to extract the text contained therein.

9. Method according to Claim 8, **characterized in that**, to generate an expanded image of a text field, a statistical average is calculated over the list of images associated with this text field and a standard deviation is calculated for each pixel of said text field and an expanded image is generated by interpolating the pixels of said text field using the statistical average and the standard deviation of the pixels of this text field.

10. Method according to Claim 8 or 9, **characterized in that** it is used to determine the semantic content of images in the audiovisual database with a view to indexing them.

11. Method according to Claim 8 or 9, **characterized in that** it is used to process a video image used as a request in a data search system.

12. Method according to one of the preceding claims, **characterized in that** said steps of the method, or some of them, are implemented on a personal computer, a fixed or mobile terminal, or a multimedia server that can be accessed by a plurality of users.

13. Device for detecting text fields in a video image, **characterized in that** it comprises:

- computation means for calculating the horizontal gradient of the intensity of each pixel of said video image and adding, for each pixel of said video image, the horizontal gradients of the pixels belonging to a horizontal integration window containing the pixel concerned so as to generate an aggregate gradients image (G),
- thresholding means for converting said aggregate gradients image (G) into a binary image (B), said thresholding means comparing the aggregate gradient value of each pixel of the aggregate gradients image with at least one threshold value, to assign each pixel either the grey level value V1 representative of a text pixel belonging to a text field, or the grey level value V2 representative of a non-text pixel not belonging to a text field, so as to obtain a binary image comprising text pixels having a grey level value V1 and non-text pixels having a grey level value V2, the neighbouring text pixels defining text fields, and
- mathematical processing means for applying, line by line, a mathematical morphology processing to said binary image in order to join the text fields that are horizontally distant by no more than N pixels to make just one field.

14. Device according to Claim 13, **characterized in that**, to calculate the horizontal gradient of each pixel of coordinates (x, y) in said video image and add together the horizontal gradients of the pixels belonging to a horizontal integration window of length T, said calculation means are formed by a filter whose response F is as follows:

$$F(x, y) = \sqrt{\int_{-T/2}^{+T/2}\left[\frac{\partial I}{\partial x}\right]^2 dx}$$

15. Device according to Claim 13 or 14, **characterized in that** said thresholding means compare the value of each pixel of the aggregate gradients image with a threshold value ($K_h$), and assign the grey level value V1 to all the pixels with an aggregate gradient greater than or equal to the threshold value ($K_h$) and the grey level value V2 to the other pixels of the image.

16. Device according to Claim 13 or 14, **characterized in that** said thresholding means compare the value of each pixel of the aggregate gradients image (G) with two threshold values, $K_b$ and $K_h$ with $K_h > K_b$, assign the grey level value V1 to the pixels with an aggregate gradient greater than or equal to the threshold value $K_h$ and to the pixels, with an aggregate gradient of between $K_b$ and $K_h$, having an adjacent series of p consecutive pixels having an aggregate gradient greater than or equal to $K_h$ and the grey level value V2 to all the other pixels of the image.

17. Device according to any one of Claims 13 to 16, **characterized in that** the mathematical processing means apply the following mathematical morphology processing steps to the binary image (B):

- an expansion step with a given structuring element (E) followed by an erosion step with the same structuring element (E) to reduce the noise in the binary image (B), and
- a horizontal and conditional expansion step for converting into text pixels the non-text pixels located between two consecutive text pixels belonging to the same line in the binary image (B) when the two consecutive text pixels are horizontally distant by no more than N pixels.

18. Device according to Claim 17, **characterized in that** the mathematical processing means also apply a final expansion step with a given structuring element followed by a final expansion step to reduce the noise in the binary image deriving from the horizontal and conditional expansion step.

**19.** Device according to one of Claims 13 to 18, used to process a video image sequence, **characterized in that** it also comprises:

- means for determining, for each text field, the list of video images in which it appears,
- means for generating, for each text field and for each video image of said associated list, an expanded image of said text field,
- means for generating, for each text field, an enhanced image of said text field based on said expanded images of said text field, and
- character recognition means (OCR) for extracting the text contained in each of said enhanced images.

**20.** Device according to Claim 19, **characterized in that** it is used to determine the semantic content of images in an audiovisual database with a view to indexing them.

**Patentansprüche**

**1.** Verfahren zur Erfassung von Textzonen in einem Videobild, **dadurch gekennzeichnet, dass** es die folgenden Schritte aufweist:

- Berechnen des horizontalen Gradienten der Intensität jedes Pixels des Videobilds und Addieren, für jedes Pixel des Videobilds, der horizontalen Gradienten der Pixel, die zu einem das betrachtete Pixel enthaltenden horizontalen Integrationsfenster gehören, um ein Summengradientenbild (G) zu erzeugen,
- Umwandeln des Summengradientenbilds (G) in ein binäres Bild (B) durch eine Operation der Schwellwertsetzung, die darin besteht, den Summengradientenwert jedes Pixels des Summengradientenbilds mit mindestens einem Schwellwert zu vergleichen, um jedem Pixel entweder den Graupegelwert V1, der für ein Textpixel repräsentativ ist, das zu einer Textzone gehört, oder den Graupegelwert V2 zuzuteilen, der für ein Nicht-Textpixel repräsentativ ist, das nicht zu einer Textzone gehört, um ein binäres Bild zu erhalten, das Textpixel, die einen Graupegelwert V1 haben, und Nicht-Textpixel aufweist, die einen Graupegelwert V2 haben, wobei die benachbarten Textpixel Textzonen definieren, und
- Anwenden, Zeile für Zeile, einer mathematischen Morphologie-Verarbeitung an das binäre Bild, um die Textzonen, die horizontal um höchstens N Pixel entfernt sind, zu verbinden, um daraus nur eine Zone zu bilden.

**2.** Verfahren nach Anspruch 1, **dadurch gekennzeichnet, dass** zur Berechnung des horizontalen Gradienten jedes Pixels mit den Koordinaten (x,y) im Videobild und zur Addition der horizontalen Gradienten der Pixel, die zu einem horizontalen Integrationsfenster der Länge T gehören, das Videobild von einem Filter gefiltert wird, dessen Antwort F die folgende ist:

$$F(x, y) = \sqrt{\int_{-T/2}^{+T/2} \left[ \frac{\partial I}{\partial x} \right]^2 dx}$$

**3.** Verfahren nach Anspruch 1 oder 2, **dadurch gekennzeichnet, dass** die Operation der Schwellwertsetzung darin besteht, den Wert jedes Pixels des Summengradientenbilds mit einem Schwellwert ($K_h$) zu vergleichen, und den Graupegelwert V1 allen Pixeln, deren Summengradient höher als oder gleich dem Schwellwert ($K_h$) ist, und den Graupegelwert V2 allen anderen Pixeln des Bilds zu verleihen.

**4.** Verfahren nach Anspruch 1 oder 2, **dadurch gekennzeichnet, dass** die Operation der Schwellwertsetzung darin besteht, den Wert jedes Pixels des Summengradientenbilds (G) mit zwei Schwellwerten $K_b$ und $K_h$ zu vergleichen, mit $K_h > K_b$, und den Graupegelwert V1 den Pixeln, deren Summengradient höher als oder gleich dem Schwellwert $K_h$ ist, und den Pixeln, deren Summengradient zwischen $K_b$ und $K_h$ liegt, mit einer benachbarten Folge von p aufeinanderfolgenden Pixeln mit einem Summengradienten höher als oder gleich $K_h$ zu verleihen, und den Graupegelwert V2 allen anderen Pixeln des Bilds zu verleihen.

**5.** Verfahren nach einem der Ansprüche 1 bis 4, **dadurch gekennzeichnet, dass** der Schritt der mathematischen Morphologie-Verarbeitung des binären Bilds (B) aufweist:

- einen Schritt der Dilatation mit einem gegebenen strukturierenden Element (E), gefolgt von einem Schritt der Erosion mit dem gleichen strukturierenden Element (E), um das Rauschen im binären Bild (B) zu reduzieren, und
- einen Schritt der horizontalen und bedingten Dilatation, um die Nicht-Textpixel, die sich zwischen zwei aufeinanderfolgenden Textpixeln befinden, die zur gleichen Zeile in einem binären Bild (B) gehören, in Textpixel umzuwandeln, wenn die zwei aufeinanderfolgenden Textpixel horizontal höchstens N Pixel voneinander entfernt sind.

6. Verfahren nach Anspruch 5, **dadurch gekennzeichnet, dass** der Schritt der mathematischen Morphologie-Verarbeitung außerdem einen letzten Schritt der Dilatation mit einem gegebenen strukturierenden Element, gefolgt von einem letzten Schritt der Dilatation aufweist, um das Rauschen im binären Bild zu reduzieren, das vom Schritt der horizontalen und bedingten Dilatation stammt.

7. Verfahren nach einem der Ansprüche 1 bis 6, **dadurch gekennzeichnet, dass** die Textzonen auf die Rechtecke ausgedehnt sind, die sie umgeben.

8. Verfahren nach einem der vorhergehenden Ansprüche, angewendet an eine Videobildfolge, **dadurch gekennzeichnet, dass** es außerdem aufweist:

- das Bestimmen, für jede Textzone, der Liste von Videobildern, in denen sie erscheint,
- das Erzeugen, für jede Textzone und für jedes Videobild der zugeordneten Liste, eines dilatierten Bilds der Textzone,
- das Erzeugen, für jede Textzone, eines verbesserten Bilds der Textzone ausgehend von den dilatierten Bildern der Textzone, und
- das Anwenden eines Schritts der Buchstabenerkennung in jedem der verbesserten Bilder, um den Text zu extrahieren, der darin enthalten ist.

9. Verfahren nach Anspruch 8, **dadurch gekennzeichnet, dass** man zur Erzeugung eines dilatierten Bilds einer Textzone einen statistischen Mittelwert der Bilder der Liste, die dieser Textzone zugeordnet ist, und einen typischen Abstand für jedes Pixel der Textzone berechnet, und durch Interpolation der Pixel der Textzone ein dilatiertes Bild erzeugt, indem man den statistischen Mittelwert und den typischen Abstand der Pixel dieser Textzone verwendet.

10. Verfahren nach Anspruch 8 oder 9, **dadurch gekennzeichnet, dass** es verwendet wird, um den semantischen Inhalt von Bildern in einer Basis von audiovisuellen Daten für ihre Indexierung zu bestimmen.

11. Verfahren nach Anspruch 8 oder 9, **dadurch gekennzeichnet, dass** es verwendet wird, um ein Videobild zu verarbeiten, das als Abfrage in einem Datensuchsystem dient.

12. Verfahren nach einem der vorhergehenden Ansprüche, **dadurch gekennzeichnet, dass** die Schritte des Verfahrens, oder ein Teil von ihnen, in einem Personal Computer, einem ortsfesten oder mobilen Endgerät oder einem Multimedia-Server angewendet werden, der für eine Vielzahl von Benutzern zugänglich ist.

13. Vorrichtung zur Erfassung von Textzonen in einem Videobild, **dadurch gekennzeichnet, dass** sie aufweist:

- Rechenmittel, um den horizontalen Gradienten der Intensität jedes Pixels des Videobilds zu berechnen, und für jedes Pixel des Videobilds die horizontalen Gradienten der Pixel zu addieren, die zu einem das betrachtete Pixel enthaltenden horizontalen Integrationsfenster gehören, um ein Summengradientenbild (G) zu erzeugen,
- Mittel zur Schwellwertsetzung, um das Summengradientenbild (G) in ein binäres Bild (B) umzuwandeln, wobei die Mittel zur Schwellwertsetzung den Summengradientenwert jedes Pixels des Summengradientenbilds mit mindestens einem Schwellwert vergleichen, um jedem Pixel entweder den Graupegelwert V1, der für ein Textpixel repräsentativ ist, das zu einer Textzone gehört, oder den Graupegelwert V2 zuzuteilen, der für ein Nicht-Textpixel repräsentativ ist, das nicht zu einer Textzone gehört, um ein binäres Bild zu erhalten, das Textpixel, die einen Graupegelwert V1 haben, und Nicht-Textpixel aufweist, die einen Graupegelwert V2 haben, wobei die benachbarten Textpixel Textzonen definieren, und
- Mittel zur mathematischen Verarbeitung, um Zeile für Zeile eine mathematische Morphologie-Verarbeitung an das binäre Bild anzuwenden, um die Textzonen, die horizontal um höchstens N Pixel entfernt sind, zu verbinden, um daraus nur eine Zone zu bilden.

14. Vorrichtung nach Anspruch 13, **dadurch gekennzeichnet, dass** zur Berechnung des horizontalen Gradienten jedes Pixels mit Koordinaten (x,y) im Videobild und zur Addition der horizontalen Gradienten der Pixel, die zu einem horizontalen Integrationsfenster der Länge T gehören, die Rechenmittel von einem Filter gebildet werden, dessen Antwort F die folgende ist:

$$F(x,y) = \sqrt{\int_{-T/2}^{+T/2}\left[\frac{\partial I}{\partial x}\right]^2 dx}$$

**15.** Vorrichtung nach Anspruch 13 oder 14, **dadurch gekennzeichnet, dass** die Mittel zur Schwellwertsetzung den Wert jedes Pixels des Summengradientenbilds mit einem Schwellwert ($K_h$) vergleichen, und den Graupegelwert V1 allen Pixeln, deren Summengradient höher als oder gleich dem Schwellwert ($K_h$) ist, und den Graupegelwert V2 allen anderen Pixeln des Bilds verleihen.

**16.** Vorrichtung nach Anspruch 13 oder 14, **dadurch gekennzeichnet, dass** die Mittel zur Schwellwertsetzung den Wert jedes Pixels des Summengradientenbilds (G) mit zwei Schwellwerten $K_b$ und $K_h$ vergleichen, mit $K_h > K_b$, den Graupegelwert V1 den Pixeln, deren Summengradient höher als oder gleich dem Schwellwert $K_h$ ist, und den Pixeln, deren Summengradient zwischen $K_b$ und $K_h$ liegt, mit einer benachbarten Folge von p aufeinanderfolgenden Pixeln mit einem Summengradienten höher als oder gleich $K_h$, verleihen, und den Graupegelwert V2 allen anderen Pixeln des Bilds verleihen.

**17.** Vorrichtung nach einem der Ansprüche 13 bis 16, **dadurch gekennzeichnet, dass** die Mittel zur mathematischen Verarbeitung die folgenden Schritte der mathematischen Morphologie-Verarbeitung am binären Bild (B) durchführen:

- einen Schritt der Dilatation mit einem gegebenen strukturierenden Element (E), gefolgt von einem Schritt der Erosion mit dem gleichen strukturierenden Element (E), um das Rauschen im binären Bild (B) zu reduzieren, und
- einen Schritt der horizontalen und bedingten Dilatation, um die Nicht-Textpixel, die sich zwischen zwei aufeinanderfolgenden Textpixeln befinden, die zur gleichen Zeile im binären Bild (B) gehören, in Textpixel umzuwandeln, wenn die zwei aufeinanderfolgenden Textpixel horizontal höchstens N Pixel voneinander entfernt sind.

**18.** Vorrichtung nach Anspruch 17, **dadurch gekennzeichnet, dass** die Mittel der mathematischen Verarbeitung außerdem einen letzten Schritt der Dilatation mit einem gegebenen strukturierenden Element, gefolgt von einem letzten Schritt der Dilatation durchführen, um das Rauschen im binären Bild zu reduzieren, das vom Schritt der horizontalen und bedingten Dilatation stammt.

**19.** Vorrichtung nach einem der Ansprüche 13 bis 18, die zur Verarbeitung einer Videobildfolge verwendet wird, **dadurch gekennzeichnet, dass** sie außerdem aufweist:

- Mittel, um für jede Textzone die Liste von Videobildern zu bestimmen, in denen sie erscheint,
- Mittel, um für jede Textzone und für jedes Videobild der zugeordneten Liste ein dilatiertes Bild der Textzone zu erzeugen,
- Mittel, um für jede Textzone ein verbessertes Bild der Textzone ausgehend von den dilatierten Bildern der Textzone zu erzeugen, und
- Mittel zur Buchstabenerkennung (OCR), um den in jedem der verbesserten Bilder enthaltenen Text zu extrahieren.

**20.** Vorrichtung nach Anspruch 19, **dadurch gekennzeichnet, dass** sie verwendet wird, um den semantischen Inhalt von Bildern in einer Basis von audiovisuellen Daten für ihre Indexierung zu bestimmen.

Image I

↓

| Calcul de gradients horizontaux somme | ⌒ 10 |

Image de gradients somme G

↓

| Binarisation | ⌒ 20 |

Image binaire B

↓

| Traitement de morphologie mathématique | ⌒ 30 |

Image binaire B

↓

| Génération de rectangles de texte | ⌒ 40 |

↓

Liste des rectangles de l'image I renfermant du texte

Détection de zones de texte

**FIG.1**

**FIG.2**

**FIG.3A**

**FIG.3B**

FIG.4A

FIG.4B

FIG.4C

FIG.4D

FIG.4E

Séquence d'Images
vidéo

Détection de zones de
texte dans chaque
image vidéo 50

Détermination des
occurrences de chaque
zone de texte dans la
séquence 51

Amélioration de la
résolution des zones
de texte 52

Reconnaissance
optique de caractères
(OCR) 53

Texte (ASCII)

**FIG.5**

P₁   α

(i,j,t)   β

(i+α,j+β,t)

P₂

(i+1,j,t)

**FIG.6**

P₄

(i,j+1,t)

P₃

(i+1,j+1,t)

Image originale

Image dilatée

Intégration sur 69 images

**FIG.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0045291 A

- EP 0720114 A

**Littérature non-brevet citée dans la description**

- **A.K JAIN ; B. YU.** Automatic Text Location in Images and Video Frames. *Technical Report MSU-CPS-97-33, PRIP Lab.,* 1997

- **SANGSHIN KWAK et al.** Video caption image enhancement for efficient character recognition. *Proceedings 15th International Conference on Pattern Recognition,* 03 Septembre 2000, vol. 2, 606-609